# EUROPÄISCHE PATENTSCHRIFT

(11) **EP 2 183 731 B1**
(45) Veröffentlichungstag und Bekanntmachung des Hinweises auf die Patenterteilung: **08.08.2012**
(21) Anmeldenummer: 08736514.4
(22) Anmeldetag: 23.04.2008
(51) Int. Cl.: G08G 1/0969, G01C 21/32, G01C 21/30

(54) **AKTUALISIERUNG VON DIGITALEN KARTEN UND ORTSBESTIMMUNG**
UPDATING DIGITAL MAPS AND POSITION DETECTION
ACTUALISATION DE CARTES NUMÉRIQUES ET DÉTERMINATION DE POSITION

(30) Priorität: 25.08.2007 DE 102007040189; 29.08.2007 DE 102007040979; 27.02.2008 DE 102008011001
(43) Veröffentlichungstag der Anmeldung: 12.05.2010
(73) Patentinhaber: Continental Teves AG & Co. OHG, 60488 Frankfurt (DE)
(72) Erfinder: RIETH, Peter, 65343 Eltville (DE); STÄHLIN, Ulrich, 65760 Eschborn (DE)
(86) Internationale Anmeldenummer: PCT/EP2008/054945
(87) Internationale Veröffentlichungsnummer: WO 2009/027123

(56) Entgegenhaltungen:
- WO-A-02/39063
- DE-A1- 10 322 559
- JP-A- 11 006 739
- JP-A- 2005 331 278
- US-A- 5 948 043
- US-A- 6 023 653
- US-A1- 2002 193 944
- US-A1- 2003 229 441
- US-A1- 2004 236 498
- US-A1- 2006 293 845
- US-A1- 2007 182 588

## Beschreibung

### Gebiet der Erfindung

Die Erfindung betrifft die Navigationstechnik für Fahrzeuge. Insbesondere betrifft die Erfindung ein Steuersystem für ein Fahrzeug und die Verwendung eines Steuersystems zur Durchführung eines Map Matching.

### Technologischer Hintergrund

Die rasante Zunahme des Fahrzeugverkehrs auf den Straßen und die damit verbundenen Staus und Fahrzeitverlängerungen führen weltweit zu erhöhten Anstrengungen, Verkehrszustände zu erkennen und diese bei der Routenwahl bzw. bei einer Routenberechnung in Navigationssystemen zu berücksichtigen.

Wenn die mit einem Ortungsverfahren gemessene geografische Koordinate direkt in das Koordinatensystem einer digitalen Karte abgebildet wird, so kann die wahre Position des Objektes in der Karte von der abgebildeten Position des Objektes in der Karte abweichen. Der Grund hierfür kann zum einen in Messfehlern beim Ortungsverfahren, zum anderen in Ungenauigkeiten der Karte liegen.

Da für ein Navigationssystem die wahre Position in der Karte bekannt sein muss, gleicht das Map Matching Verfahren die gemessene Position mit den Karteninformationen über die Lage und Geometrie von Objekten in der Karte ab, so dass die wahrscheinlichste Position des Objektes in der Karte ermittelt wird.

Bei Fahrzeug-Navigationssystemen wird die Position des Fahrzeugs meist mit Unterstützung des Satellitenortungssystems GPS gemessen. Die Richtigkeit der gemessenen und der tatsächlichen Position wird bei GPS mit ca. 15 m angegeben. Ebenso kann die digitale Karte Toleranzen im Meterbereich aufweisen. Durch das Navigationsgerät muss nun die Position des Fahrzeugs in der digitalen Karte ermittelt werden, damit z. B. eine sinnvolle Routenberechnung vom aktuellen Standort zum Fahrziel bestimmt werden kann. Ohne den Abgleich der gemessenen Position mit den Karteninformationen könnte sich das Fahrzeug außerhalb der digitalisierten Straßen oder auf der falschen Straße in der Karte befinden. Da für das Navigationsgerät die Lage des Fahrzeugs in der digitalen Karte entscheidend ist, wird die gemessene Position mit den Karteninformationen so abgeglichen, dass der wahrscheinlichste Standort des Fahrzeugs in der Karte für die Navigation ermittelt wird. Hierzu werden beim Map Matching die Kenntnisse über die Bewegungen des Fahrzeugs ausgenutzt.

Digitale Karten sind meist schon bei ihrer Auslieferung veraltet. Von daher ist eine Aktualisierung (Update) der Karte unerlässlich, wenn die digitale Karte mit den aktuellen Verhältnissen übereinstimmen soll. Diese Aktualisierungen umfassen jedoch eine große Datenmenge, da immer die komplette Karte auf den neuesten Stand gebracht wird.
Die DE10322559 offenbart eine Vorrichtung zum Bereitstellen, Aktualisieren, Ergänzen und/oder Modifizieren mindestens einer digitalen Karte, mittels derer nach einem regionalen Kriterium und/oder nach mindestens einem thematischen Kriterium spezifizierte, insbesondere ortsbezogene Daten und Informationen für mindestens ein der Vorrichtung zugeordnetes Informationssystem, insbesondere für mindestens ein vorzugsweise prädiktives Assistenzsystem und/oder für mindestens ein vorzugsweise hybrides Navigationssystem, bereitstellbar sind.

Die US 2003229441 beschreibt ein Verfahren zur Navigation, dass ein Abspeichern von Kartendaten auf einem Server umfasst, wobei die Kartendaten beinhalten Vektorinformationen, die Straßen in einer Karte abgrenzen. Ein Element der Vektorinformation, das zu einem Gebiet in welchem ein Nutzer eines mobilen Endgerätes sich gerade befindet, korrespondiert, wird vom Server zum mobilen Endgerät geladen. Die ungefähre Position des Nutzers wird durch die Verwendung eines Lokalisierungsgerätes, welches mit dem mobilen Endgerät verbunden ist, ermittelt und die ungefähre Position wird im mobilen Endgerät mittels der heruntergeladenen Vektorinformation korrigiert, umso die Ortsbestimmung des Nutzers auf eine der Straßen auf der Karte zu bestimmen.

Die US5948043 offenbart ein Verfahren zum Verfolgen eines Objektes unter Verwendung von GPS-Daten und einer elektronischen Karte. Hierzu wird festgestellt, ob die GPS-Daten zuverlässig sind, eine Aktualisieren der Position des Objektes basierend auf den GPS-Daten durchgeführt, wenn festgestellt ist, dass die GPS-Daten zuverlässig sind, basierend auf einer vorausgehenden kartenangepassten Position und einem vorausgehenden eingespeicherten Kurs, und ein Einpassen bzw. Abgleichen der aktualisierten Position des Objekts mit der elektronischen Karte, wenn festgestellt wird, dass die GPS-Daten zuverlässig sind, wobei das Feststellen und das Abgleichen ohne Verwendung von Daten von anderen Navigationssensoren als einem oder mehreren GPS-Sensoren durchgeführt werden.

### Zusammenfassung der Erfindung

Es ist eine Aufgabe der Erfindung, eine verbesserte Verwaltung von digitalen Kartendaten und Aktualisierungsdaten bereitzustellen und innerhalb von einem Fahrzeug anderen funktionalen Einheiten bereitzustellen.

Es sind ein Steuersystem für ein Fahrzeug, die Verwendung eines Steuersystems zur Aktualisierung einer digitalen Karte, gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Steuersystem, das Verfahren, die Verwendungen, das Computerprogrammprodukt und das computerlesbare Medium.

Gemäß einem Ausführungsbeispiel der Erfindung ist ein Steuersystem für ein Fahrzeug angegeben, welches ein erstes Steuergerät zur Speicherung von digitalen Kartendaten und ein zweites Steuergerät zur Speicherung von Aktualisierungsdaten aufweist. Das Steuersystem ist zur getrennten Speicherung der digitalen Kartendaten und der Aktualisierungsdaten ausgeführt.

In anderen Worten werden die digitalen Karten, bei denen es sich beispielsweise um digitale Navigationskarten handelt, und die Aktualisierung der Navigationskartendaten getrennt gehalten.

Unter dem Begriff "digitale Karten" sind auch Karten für ADAS (Advanced Driver Assistance System) zu verstehen, ohne dass eine Navigation stattfindet. Ein Beispiel ist die "Map and Positioning Engine" MPE von Navteq.

Die digitalen Kartendaten und die Aktualisierung dieser digitalen Kartendaten (Update) werden auf unterschiedlichen Steuergeräten aufgenommen. Unter dem Begriff Aufnahme ist hierbei ein Aufspielen und/oder die Speicherung der entsprechenden Daten zu verstehen.

Da es sich bei den digitalen Kartendaten um relativ große Datenmengen handelt, weist das erste Steuergerät einen entsprechend großen Speicher auf. Die Aktualisierungsdaten, welche im Regelfall eine wesentlich kleinere Datenmenge darstellen, sind im zweiten Steuergerät gespeichert und betreffen unter Umständen nur einen kleinen Teil der digitalen Kartendaten. Die Aktualisierungsdaten werden somit unabhängig von den digitalen Kartendaten aufbewahrt oder gespeichert und können somit auch unabhängig davon installiert und weiterverarbeitet werden.

Ein Update (Aktualisierung) der Kartendaten kann außerhalb des ersten Steuergeräts, z. B. innerhalb eines Fahrerassistenzsystems oder eines Navigationssystems, erfolgen. Die Kartendaten im ersten Steuergerät bleiben hierbei unverändert, wodurch die Systemsicherheit erhöht wird, weil die Wahrscheinlichkeit einer Beschädigung der im ersten Steuergerät abgelegten Kartendaten verringert wird.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Gemäß einem weiteren Ausführungsbeispiel der Erfindung ist das erste Steuergerät als Headunit ausgeführt, die z.B. das Navigationssystem beinhaltet. Bei einer solchen Headunit handelt es sich beispielsweise um eine Vorrichtung, die die Bedienung von Fahrzeug- und Infotainmentkomponenten vereint. Die Headunit ermöglicht eine zentrale Steuerung verschiedener Bordsysteme. So können beispielsweise die Klimaanlage, das Radio oder optional auch das Navigationssystem über die Headunit bedient werden.

Es kann eine Bluetooth-Schnittstelle oder eine andere Schnittstelle vorgesehen sein, die es ermöglicht, eine einfache Kommunikation mit Mobiltelefonen oder PDAs durchzuführen. Auf diese Weise können auch mobile Geräte über die Headunit angesteuert werden.

Gemäß einem weiteren Ausführungsbeispiel der Erfindung ist das erste Steuergerät als Navigationssystem des Fahrzeugs ausgeführt oder zumindest mit einem Navigationssystem des Fahrzeugs gekoppelt.

Sofern das erste Steuergerät an ein Fahrzeugnavigationssystem angeschlossen ist, kann das erste Steuergerät dem Navigationssystem die digitalen Kartendaten oder die Navigationskartendaten übermitteln. Die Datenübermittlung kann über ein Datenkabel oder über eine Funkübertragungsstrecke erfolgen.

Im Navigationssystem kann dann eine Aktualisierung der digitalen Kartendaten bzw. der Navigationskartendaten durchgeführt werden.

Gemäß einem weiteren Ausführungsbeispiel der Erfindung ist das Navigationssystem zur Navigation ausschließlich auf Basis der digitalen Kartendaten ausgeführt. Eine Aktualisierung der digitalen Kartendaten oder der darauf basierenden Navigationskartendaten ist nicht vorgesehen. Hierdurch kann der Aufbau des Navigationssystems vereinfacht werden.

Gemäß einem weiteren Ausführungsbeispiel der Erfindung ist das zweite Steuergerät als Fahrerassistenzsystem ausgeführt oder zumindest mit einem Fahrerassistenzsystem gekoppelt.

Im ersten Fall kann das Update der digitalen Kartendaten im zweiten Steuergerät durchgeführt werden. Im zweiten Fall, bei dem das Fahrerassistenzsystem an das zweite Steuergerät gekoppelt ist, kann das Update im Fahrerassistenzsystem durchgeführt werden.

Gemäß einem weiteren Ausführungsbeispiel der Erfindung ist das Fahrerassistenzsystem zur Anreicherung oder Aktualisierung der digitalen Kartendaten auf Basis der Aktualisierungsdaten ausgeführt.

Beispielsweise kann vorgesehen sein, dass das Fahrerassistenzsystem die kompletten digitalen Kartendaten von dem ersten Steuergerät abruft und daraufhin eine Aktualisierung und/oder Anreicherung dieser digitalen Kartendaten vornimmt. Auch kann das Fahrerassistenzsystem derart ausgeführt sein, dass es nur einen bestimmten Bereich der digitalen Karte aktualisiert und hierfür beispielsweise auch nur einen bestimmten Teil der digitalen Kartendaten von dem ersten Steuersystem übernimmt. Auf diese Weise können die zu übertragende Datenmenge reduziert und die Aktualisierungsgeschwindigkeit erhöht werden.

Gemäß einem weiteren Ausführungsbeispiel der Erfindung ist das erste Steuergerät nicht zur Aktualisierung der digitalen Kartendaten auf Basis der Aktualisierungsdaten ausgeführt. Eine Aktualisierung der digitalen Kartendaten innerhalb des ersten Steuergerätes ist nicht möglich. Auf diese Weise kann verhindert werden, dass die digitalen Kartendaten fehlerhaft überschrieben oder bei einer Aktualisierung anderweitig beschädigt werden.

Gemäß einem weiteren Ausführungsbeispiel der Erfindung ist das Navigationssystem zur Anreicherung oder Aktualisierung der digitalen Kartendaten auf Basis der Aktualisierungsdaten ausgeführt. Beispielsweise können also die digitalen Kartendaten sowohl vom Fahrerassistenzsystem als auch vom Navigationssystem angereichert oder aktualisiert werden, je nach Anwendungsfall.

Gemäß einem weiteren Ausführungsbeispiel der Erfindung ist das erste Steuergerät oder zumindest das Navigationssystem zur Durchführung eines Map Matching und zur Ermittlung eines möglichen Aufenthaltsbereichs des Fahrzeugs auf Basis einer Auswertung einer Fahrhistorie ausgeführt.

Map Matching kann auch in der Zentrale vorgenommen werden, wenn nur GPS und Historie vorhanden sind. Auch dort ist die Verwendung von Wahrscheinlichkeiten und mehreren möglichen Positionen möglich und vorteilhaft, z.B. bei einem eCall, bei dem es sich um einen automatisch abgesetzten Notruf durch ein elektronisches Gerät im Fahrzeug handelt.
Der mögliche Aufenthaltsbereich des Fahrzeugs kann hierbei auch dann ermittelt werden, wenn kein genaues Map Matching möglich ist, da keine eindeutige Zuordnung zu einer Position in der Karte möglich ist.

Auf diese Weise wird erreicht, dass mehrere präzise Ortsangaben, insbesondere in Notfallsituationen, ausgegeben werden können, auch wenn kein sicheres oder eindeutiges Map Matching möglich ist.

Beispielsweise erfolgt bei unzureichendem Empfang von Signalen zur Ortinformation ein Map Matching mittels der Auswertung der Fahrhistorie oder anderer Informationen, wie später näher dargestellt (wie z.B. Winkel, Abstand, ...) und hieraus wird dann der mögliche Aufenthaltsbereich des Fahrzeugs ermittelt. Hierbei können sich auch mehrere mögliche Aufenthaltsbereiche ergeben, die räumlich voneinander getrennt sind, je nach den örtlichen, geografischen oder baulichen Gegebenheiten des betreffenden Gebiets.

Es ist zu beachten, dass das Map Matching und die Ermittlung des möglichen Aufenthaltsbereichs des Fahrzeugs auch von dem zweiten Steuergerät vorgenommen werden können. Weiterhin ist hierfür nicht die Trennung der beiden Steuergeräte erforderlich. Vielmehr kann in diesem Fall das Steuersystem auch nur ein einziges Steuergerät aufweisen.

Gemäß einem weiteren Ausführungsbeispiel der Erfindung ist das erste Steuergerät oder zumindest das Navigationssystem zur Ermittlung einer lokalen Aufenthaltswahrscheinlichkeit des Fahrzeugs auf Basis des möglichen Aufenthaltsbereichs und zur darauffolgenden Ergänzung einer Ortinformation ausgeführt.

Durch den Aufenthaltsbereich wird also eine lokale Aufenthaltswahrscheinlichkeit generiert und es werden die Signale zur Ortinformation entsprechend ergänzt.

Gemäß einem weiteren Ausführungsbeispiel der Erfindung wird die Ortinformation in Form von textuellen Metadaten ergänzt. Gemäß der Erfindung ist das erste Steuergerät oder zumindest das Navigationssystem zur Übermittlung von Daten bezüglich des Aufenthaltsbereiches oder der lokalen Aufenthaltswahrscheinlichkeit an eine Zentrale ausgeführt, auch falls keine eindeutige Zuordnung zu einer erlaubten Position auf einer Navigationskarte möglich ist.

In anderen Worten ist das System jederzeit in der Lage, einer Leitzentrale oder auch anderen Systemen im Fahrzeug, z.B. ADAS, die möglichen, wahrscheinlichsten Positionen des Fahrzeugs zu übermitteln. Selbst wenn also aufgrund einer ungenauen Messung, z. B. aufgrund schwacher Satellitensignale oder aufgrund eines Ausfalls des GPS-Gerätes, ein exaktes Map Matching nicht möglich ist, wird der Zentrale mitgeteilt, an welchen Orten sich das Fahrzeug befinden könnte. Hierdurch kann der Bereich, in dem beispielsweise ein Rettungsdienst suchen muss, verkleinert werden.

Gemäß einem weiteren Ausführungsbeispiel der Erfindung enthalten die an die Zentrale übermittelten Daten Informationen über mehrere mögliche Positionen des Fahrzeugs.

Gemäß einem weiteren Ausführungsbeispiel der Erfindung enthalten die Informationen über die mehreren möglichen Positionen des Fahrzeugs eine Angabe einer Aufenthaltswahrscheinlichkeit.

Werden beispielsweise drei verschiedene mögliche Aufenthaltspositionen ermittelt, kann jede einzelne Position mit der entsprechenden Aufenthaltswahrscheinlichkeit versehen werden. Diese Daten werden dann gemeinsam an die Leitzentrale übermittelt, so dass der Rettungsdienst beurteilen kann, in welchen Gebieten verstärkt zu suchen ist.

Gemäß einem weiteren Ausführungsbeispiel der Erfindung ist ein Verfahren zur Aktualisierung einer digitalen Karte angegeben, bei welchem eine Speicherung von digitalen Kartendaten in einem ersten Steuergerät und eine getrennte Speicherung von Aktualisierungsdaten in einem zweiten Steuergerät durchgeführt wird.

Gemäß einem weiteren Ausführungsbeispiel der Erfindung ist das erste Steuergerät als Navigationssystem des Fahrzeugs ausgeführt oder zumindest mit einem Navigationssystem des Fahrzeugs gekoppelt und das zweite Steuergerät ist als Fahrerassistenzsystem ausgeführt oder zumindest mit einem Fahrerassistenzsystem gekoppelt.

Gemäß einem weiteren Ausführungsbeispiel der Erfindung weist das Verfahren weiterhin eine Durchführung eines Map Matching und eine Ermittlung eines möglichen Aufenthaltsbereiches des Fahrzeugs auf Basis einer Auswertung einer Fahrhistorie durch das erste Steuergerät oder zumindest das Navigationssystem auf.

Gemäß einem weiteren Ausführungsbeispiel der Erfindung ist die Verwendung eines oben beschriebenen Steuersystems zur Aktualisierung einer digitalen Karte angegeben.

Gemäß einem weiteren Ausführungsbeispiel der Erfindung ist die Verwendung eines oben beschriebenen Steuersystems zur Durchführung eines Map Matching und zur Ermittlung eines möglichen Aufenthaltsbereiches des Fahrzeugs auf Basis einer Auswertung einer Fahrhistorie, eines Fahrwinkels, oder anderer Messdaten, die die Bewegung oder den Ort des Fahrzeugs charakterisieren durch das erste Steuergerät oder zumindest das Navigationssystem angegeben.

Gemäß einem weiteren Ausführungsbeispiel der Erfindung ist ein Computerprogrammprodukt angegeben, das, wenn es auf einem Prozessor ausgeführt wird, den Prozessor anleitet, die oben angegebenen Verfahrensschritte durchzuführen.

Gemäß einem weiteren Ausführungsbeispiel der Erfindung ist ein computerlesbares Medium angegeben, auf dem ein Computerprogrammprodukt gespeichert ist, das, wenn es auf einem Prozessor ausgeführt wird, den Prozessor anleitet, die oben angegebenen Verfahrensschritte durchzuführen.

Eine grundsätzliche Überlegung der Erfindung liegt darin, Kartendaten und Aktualisierungsdaten auf getrennten Geräten zu speichern. Eine weitere grundsätzliche Überlegung der Erfindung liegt darin, die Übermittlung eines Aufenthaltsgebietes an eine Zentrale auch dann zu ermöglichen, falls keine eindeutige Zuordnung zu einer Position mittels Map Matching möglich ist. Auch ist die Erfindung ohne Zentrale implementierbar, z.B. bei ADAS an das ADAS-Gerät.

Im Folgenden werden mit Verweis auf die Figuren bevorzugte Ausführungsbeispiele der Erfindung beschrieben.
Fig. 1 zeigt eine schematische Darstellung eines Steuersystems gemäß einem Ausführungsbeispiel der Erfindung.
Fig. 2 zeigt eine schematische Darstellung eines Gesamtsystems gemäß einem Ausführungsbeispiel der Erfindung.
Fig. 3 zeigt die Trennung der Kartendaten und der Aktualisierung der Kartendaten (Updatedaten) im Zusammenwirken mit den Steuergeräten gemäß einem Ausführungsbeispiel der Erfindung.
Fig. 4 zeigt eine Angabe möglicher Aufenthaltsbereiche auf Basis einer Auswertung der Fahrhistorie gemäß einem Ausführungsbeispiel der Erfindung.
Fig. 5 zeigt ein Flussdiagramm eines Verfahrens gemäß einem Ausführungsbeispiel der Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

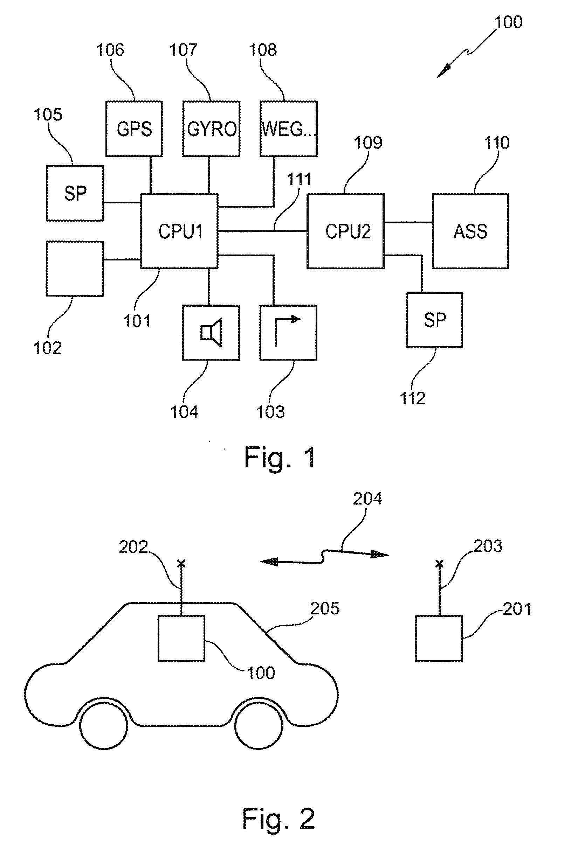

Fig. 1 zeigt eine schematische Darstellung von Komponenten eines Steuersystems für ein Fahrzeug gemäß einem Ausführungsbeispiel der Erfindung. Das Steuersystem 100 ist beispielsweise in einem Fahrzeug installiert und dient der Aktualisierung einer digitalen Navigationskarte. Das Steuersystem 100 weist ein erstes Steuergerät 101, beispielsweise in Form einer ersten CPU, sowie ein zweites Steuergerät 109, beispielsweise in Form einer zweiten CPU, auf.

Mit dem ersten Steuergerät 101 ist eine Eingabeeinheit 102 verbunden. Über die Eingabeeinheit 102 können verschiedene Einstellungen des Steuersystems vorgenommen werden und beispielsweise für eine Navigationseinheit des Steuersystems ein Zielort und ggf. auch ein Standort gewählt werden. Die Eingabe des Zielortes ist dabei beispielsweise durch Eingabe des vollständigen Namens des Zielortes oder auch durch Auswahl aus einer Liste, die auf einer optischen Ausgabeeinheit, wie beispielsweise einem Monitor 103, dargestellt wird, möglich. Auf dem Monitor 103 werden auch die Zielführungsinformationen ausgegeben. Darüber hinaus können die Zielführungsinformationen auch über eine akustische Ausgabeeinheit 104 ausgegeben werden. Die Ausgabe über eine akustische Ausgabeeinheit 104 hat den Vorteil, dass der Fahrer weniger vom aktuellen Verkehrsgeschehen abgelenkt wird. In einem Speicherelement 105, das mit der zentralen Recheneinheit (erstes Steuergerät) 101 verbunden ist oder in dem ersten Steuergerät integriert ist, sind die Landkartendaten (Navigationskartendaten) in Form von Datensätzen abgelegt. Beispielsweise sind in dem Speicherelement 105 oder 112 auch zusätzliche Informationen über Verkehrsbeschränkungen und dergleichen abgelegt und den Datensätzen zugeordnet.

Das zweite Steuergerät 109 ist an ein Fahrerassistenzsystem 110 angeschlossen und erhält vom zweiten Speicherelement 112 Aktualisierungsdaten.

Die beiden Steuergeräte 101, 109 sind über die Leitung 111 miteinander verbunden. Auch kann eine kabellose Verbindung vorgesehen sein, ggf. alternativ zu der Leitung 111.

Zur Bestimmung der aktuellen Fahrzeugposition weist das Steuersystem 100 eine Navigationseinheit 106 mit einem GPS-Empfänger auf, der zum Empfang von Navigationssignalen von GPS-Satelliten ausgelegt ist. Natürlich kann die Navigationseinheit 106 mit dem GPS-Empfänger auch für andere Satellitennavigationssysteme ausgeführt sein.

Da die GPS-Signale aber beispielsweise im innerstädtischen Bereich nicht immer empfangbar sind, weist das Steuersystem zur Durchführung einer Koppelnavigation zudem einen Richtungssensor 107 und einen Wegstreckensensor 108 und ggf. auch einen Lenkradwinkelsensor auf. Signale des GPS-Empfängers, des Wegstreckensensors und des Richtungssensors werden beispielsweise in dem zentralen Steuergerät 101 bearbeitet. Die aus diesen Signalen ermittelte Fahrzeugposition wird über Map Matching mit den Straßenkarten abgeglichen. Die so gewonnene Zielführungsinformation wird über den Monitor 103 schließlich ausgegeben.

Die Navigationskartendaten sind normalerweise statisch und daher schnell veraltet. Über mehrere Mechanismen können diese Kartendaten immer auf dem neuesten Stand gehalten werden. Erfindungsgemäß werden Kartendaten und Update getrennt gehalten. Die statischen Kartendaten werden als Grundlage verwendet und getrennt davon werden die Änderungen gespeichert. Damit ist es möglich, Kartendaten und Updatedaten in getrennten Steuergeräten 101, 109 (oder den zugehörigen Speichern 105, 112) unterzubringen, z. B. Kartendaten in der Headunit und Updatedaten im Steuergerät für ein Fahrerassistenzsystem.

Alternativ oder zusätzlich zum Fahrerassistenzsystem kann auch eine Telematics Control Unit zur Kommunikation mit einem externen Server, beispielsweise über GSM, UMTS, WiMax oder WLAN, vorgesehen sein. Eine Telematics Control Unit (TCU) ist z.B. ein Rechnersystem mit eigenen Memorys, eigenen Bussystemen, Controllern für Feldbusse und Drahtlos-Netzwerke, PC-kompatiblen Schnittstellen wie der USB-Schnittstelle oder 1394, mit A/D-Wandler, I/O-Schittstellen u.v.m. TCU-Einheiten sind zentrale Komponenten in Bordnetzen. Sie verarbeiten die Daten, die sie über die angeschlossenen Feldbusse, wie den CAN-Bus oder den MOST-Bus, erhalten, steuern die Aktoren und übertragen die Daten zum Fahrerassistenzsystem, wo sie auf den Displays angezeigt werden.

Das Fahrerassistenzsystem benötigt das Update und die Kartendaten, um dem Fahrer bei der Steuerung des Fahrzeugs, beispielsweise bei der Geschwindigkeitsbestimmung oder der Einstellung des Kurvenlichts, zu helfen. Beispiele für ein Fahrerassistenzsystem sind Traktionskontrolle, wie ABS (Anti-Blockier-System), ASR (Antriebs-Schlupf-Regelung), ESP (Elektronisches Stabilitätsprogramm, kann auch Antriebs-Schlupf-Regelung beinhalten) oder EDS (Elektronische Differentialsperre). Weiterhin kann das Fahrerassistenzsystem zur Steuerung des Lichts (adaptives Kurvenlicht, Ein- und Ausschalten des Fahrlichts, Fernlichtassistent, Nachtsichtsystem, etc.) vorgesehen sein. Zusätzlich oder alternativ dazu kann das Fahrerassistenzsystem zusätzlichen Komfort und Sicherheit bereitstellen, beispielsweise durch einen Tempomat oder einen Abstandsregeltempomant ACC (Adaptive Cruise Control), eine Einparkhilfe mit beispielsweise Ultraschallsensoren zur Hindernis- und Abstandserkennung, einen Bremsassistenten, einen Abstandswarner, usw.

Das erste Steuergerät 101 weist eine hinreichend große Datenbank 105 zur Speicherung der Kartendaten auf. Der Datenspeicher 112 des zweiten Steuergeräts 109 kann entsprechend kleiner ausgeführt sein, um lediglich die Updatedaten aufzunehmen.

Beispielsweise arbeitet das Navigationssystem 106 mit den "alten" Daten und kann somit einfacher und preiswerter ausgeführt sein, während das Fahrerassistenzsystem 110 die Daten aus dem Navigationssystem noch mit seinen Updatedaten anreichert. Das Steuergerät mit den Kartendaten muss nicht zum Ändern dieser großen Datenbank ausgeführt sein und das Steuergerät mit den Updatedaten muss nicht die großen Datenmengen der Kartendaten speichern können.

Ein weiterer Vorteil liegt in der Stabilität der ursprünglichen Kartendaten. Da diese nie verändert werden, können sie nicht durch ein fehlerhaftes Update in einen Zustand versetzt werden, der es unmöglich macht, sie zu benutzen. Selbst im schlimmsten Fall sind nur die Updatedaten unbrauchbar und es kann weiterhin auf die zwar alten aber funktionierenden Kartendaten des ersten Steuergeräts zurückgegriffen werden.

Fig. 2 zeigt ein schematische Darstellung eines Gesamtsystems gemäß einem Ausführungsbeispiel der Erfindung. Das Gesamtsystem weist ein Steuersystem 100 sowie eine Zentrale oder einen Server 201 auf. Das Steuersystem 100 und die Zentrale 201 sind über die Funkmodule 202 bzw. 203 kommunizierfähig miteinander gekoppelt. Die Kommunikation zwischen den beiden Geräten 100, 201 findet über eine drahtlose Übertragungsstrecke 204 statt.

Das Steuersystem 100 ist in einem Fahrzeug 205 eingebaut. Bei den Komponenten 101, 102, 103, 104, 105, 106, (107) kann es sich auch um ein mobiles Gerät handeln, das sich im Auto befindet.

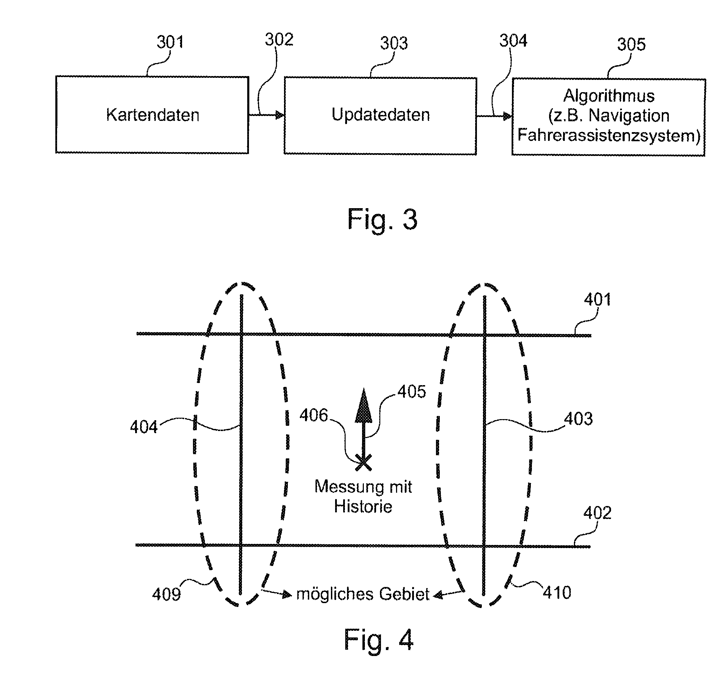

Fig. 3 zeigt die Aufteilung von Kartendaten und Aktualisierung dieser Kartendaten auf verschiedene Steuergeräte. Die Kartendaten sind hierbei im ersten Steuergerät gespeichert (symbolisiert durch Einheit 301) und werden mit den Updatedaten 303 verglichen. Dies ist mit Pfeil 302 symbolisiert. Falls erforderlich, wird ein Update durchgeführt. Die Kartendaten 301 und die Updatedaten 303 können zusammen oder einzeln an ein Navigationssystem und/oder ein Fahrerassistenzsystem 305 übergeben werden. Daraufhin wird beispielsweise ein Map Matching Algorithmus oder eine Routenplanung durchgeführt. Für die Übergabe der Daten ist beispielsweise eine sog. ADASIS-Schnittstelle 304 vorgesehen. Die Kartendaten 301 und die Fahrerassistenz 305 können auch in der selben Einheit laufen. Ein grobes Map Matching ist auch schon in der Einheit 301 möglich.

Die Übergabe der Daten an ein Navigationssystem oder ein Fahrerassistenzsystem 305 mit einem entsprechenden Algorithmus ist durch Pfeil 304 symbolisiert.

Entscheidend ist, dass Updatedaten und Kartendaten getrennt aufbewahrt und/oder verwaltet werden. Dadurch können die Rechnerperformance gesteigert sowie eine Redundanz bereitgestellt werden.

Fig. 4 zeigt eine schematische Darstellung von möglichen Gebieten auf Basis einer Auswertung der Fahrhistorie gemäß einem Ausführungsbeispiel der Erfindung. Es sind verschiedene Straßen 401, 402, 403 und 404 dargestellt, auf denen das Fahrzeug fahren kann. Weiterhin ist eine Position 406 dargestellt, die sich aus einer Positionsmessung inklusive der Historie ergibt. Diese Position ist mit einem Richtungs- und Geschwindigkeitspfeil 405 verknüpft, der die aktuell oder in der nahen Vergangenheit gemessene Richtung und Geschwindigkeit des Fahrzeugs darstellt.

Aus den Historieinformationen können in Kombination mit den Karteninformationen mögliche wahrscheinliche Aufenthaltsräume 409, 410 des Fahrzeugs berechnet werden.

Map Matching hat das Ziel, aus der Kombination von Kartenmaterial, aktueller GPS-Position und GPS-Werten der nahen Vergangenheit, beispielsweise im Sekundenbereich, die aktuelle Position auf der Karte zu ermitteln und damit auch die Adresse oder die Position, an der sich das Gerät mit Map Matching befindet. Das Ergebnis kann erfindungsgemäß verbessert werden, wenn beispielsweise kein sicheres oder eindeutiges Map Matching möglich ist. Ein solches sicheres oder eindeutiges Map Matching kann dann unmöglich sein, wenn beispielsweise das GPS-Gerät gerade eingeschaltet worden ist. In diesem Fall sind die Messungen oft ungenau. Weiterhin kann ein solches sicheres oder eindeutiges Map Matching unmöglich sein, wenn der Signalempfang schlecht ist. In diesem Fall kann oft nicht genau bestimmt werden, ob sich das Fahrzeug z.B. nach einer Straßengabelung auf dem linken Straßenarm oder auf dem rechten Straßenarm befindet.

In diesem Fall soll das mögliche Gebiet ausgegeben werden, in dem sich das Fahrzeug aufhalten könnte. Dies ist vor allem in Notsituationen hilfreich, wenn aufgrund der GPS-Messungen keine eindeutige Position möglich ist. Durch das ermittelte Gebiet wird der Bereich verkleinert, in dem ein Rettungsdienst suchen muss, wie in Fig. 4 angegeben.

Schon bei nicht eindeutiger Zuordnung der Position zu einer Straße wird Information über den Aufenthaltsort ausgegeben. Somit wird eine Übermittlung des Aufenthaltsgebiets des Fahrzeugs durchgeführt, wenn keine eindeutige Zuordnung zu einer Position möglich ist.

Beispielsweise berechnet das System eine Anzahl an möglichen Gebieten, in denen sich das Fahrzeug aufhalten kann (409, 410). Die Berechnung wird hierbei auf Basis historischer Informationen sowie Karteninformationen und GPS-Informationen durchgeführt. Das Verfahren kann hierbei darauf abzielen, dass insbesondere die Straßen berücksichtigt werden, die möglichst nahe an der gemessenen Position des Fahrzeugs liegen. Weiterhin können die Fahrtrichtung oder aber auch die Geschwindigkeit des Fahrzeugs mit einbezogen werden. Auch die Auswertung vergangener Messdaten ist möglich, wie z. B. Informationen darüber, auf welcher Straße sich das Fahrzeug vor kurzer Zeit noch befunden hat. Weiterhin können Gewichtungsfaktoren eingeführt werden. Beispielsweise können große Straßen mit einer hohen Wahrscheinlichkeit und kleine Straßen mit einer geringeren Wahrscheinlichkeit für die tatsächliche Position des Fahrzeugs belegt werden.

Das Verfahren findet insbesondere dann Anwendung, wenn die vom Fahrzeug abgesetzten Daten von einem Leitrechner einer Rettungszentrale oder dergleichen weitergegeben werden müssen, ohne dass ein Mensch als Interpolator dazwischengeschaltet ist. Das Leitsystem bekommt mehrere Auswahlmöglichkeiten, die beispielsweise mit Aufenthaltswahrscheinlichkeiten gekennzeichnet sind. Bezogen auf das Beispiel der Fig. 4 können die an den Leitrechner übermittelten Daten z.B. enthalten, dass die Wahrscheinlichkeit, dass sich das Fahrzeug im Gebiet 409 befindet, 40% beträgt und dass die Wahrscheinlichkeit, dass sich das Fahrzeug im Gebiet 410 befindet, 60% beträgt.

Auf diese Weise ist eine Automatisierung der Instruierung der Rettungskräfte möglich, ohne die Notwendigkeit einer menschlichen Interaktion.

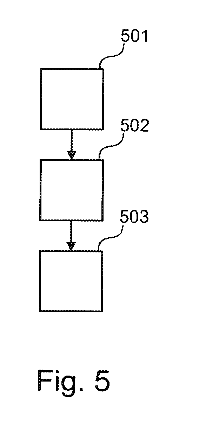

Fig. 5 zeigt ein Flussdiagramm eines Verfahrens gemäß einem Ausführungsbeispiel der Erfindung. In Schritt 501 werden Navigationskartendaten in einem ersten Steuergerät gespeichert, in Schritt 502 werden Aktualisierungsdaten in einem zweiten Steuergerät getrennt gespeichert und in Schritt 503 werden ein Map Matching sowie eine Ermittlung eines möglichen Aufenthaltsbereichs des Fahrzeugs auf Basis einer Auswertung einer Fahrhistorie durch das erste Steuergerät oder zumindest das Navigationssystem durchgeführt.

Ergänzend sei darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Steuersystem für ein Fahrzeug (100), das Steuersystem umfassend: ein erstes Steuergerät zur Speicherung von Navigationskartendaten(101); ein zweites Steuergerät zur Speicherung von Aktualisierungsdaten (109); wobei das Steuersystem (100) zur getrennten Speicherung der Navigationskartendaten und der Aktualisierungsdaten ausgeführt ist, das erste Steuergerät als Navigationssystem des Fahrzeugs ausgeführt ist(106) oder zumindest mit einem Navigationssystem des Fahrzeugs gekoppelt ist das Navigationssystem zur Navigation ausschließlich auf Basis der Navigationskartendaten ausgeführt ist,
**dadurch gekennzeichnet,**
**dass** das erste Steuergerät (101) oder zumindest das Navigationssystem (106) zur Übermittlung von Daten bezüglich des Aufenthaltsbereiches oder der lokalen Aufenthaltswahrscheinlichkeit an eine Zentrale oder an ein Advanced Driver Assistance System(110) ausgeführt ist, auch falls keine eindeutige Zuordnung zu einer erlaubten Position auf einer Navigationskarte möglich ist.

2. Steuersystem nach Anspruch 1,
**dadurch gekennzeichnet,**
**dass** die an die Zentrale oder das Advanced Driver Assistance Systems (110) übermittelten Daten Informationen über mehrere mögliche Positionen des Fahrzeugs enthalten.

3. Steuersystem nach einer der Ansprüche 1 oder 2,
**dadurch gekennzeichnet,**
**dass** das erste Steuergerät als Headunit ausgeführt ist.

4. Steuersystem nach einem der vorhergehenden Ansprüche,
**dadurch gekennzeichnet,**
**dass** das zweite Steuergerät (109) als Fahrerassistenzsystem (110) ausgeführt ist oder zumindest mit einem Fahrerassistenzsystem gekoppelt ist.

5. Steuersystem nach Anspruch 4,
**dadurch gekennzeichnet,**
**dass** das Fahrerassistenzsystem (110) zur Anreicherung oder Aktualisierung der Navigationskartendaten auf Basis der Aktualisierungsdaten ausgeführt ist.

6. Steuersystem nach einem der vorhergehenden Ansprüche,
**dadurch gekennzeichnet,**
**dass** das erste Steuergerät (101) nicht zur Aktualisierung der Navigationskartendaten auf Basis der Aktualisierungsdaten ausgeführt ist.

7. Steuersystem nach einem der Ansprüche 1 bis 8,
**dadurch gekennzeichnet,**
**dass** das erste Steuergerät (101) oder zumindest das Navigationssystem zur Durchführung eines Map Matching und zur Ermittlung eines möglichen Aufenthaltsbereiches des Fahrzeugs auf Basis einer Auswertung einer Fahrhistorie ausgeführt ist.

8. Steuersystem nach Anspruch 7,
**dadurch gekennzeichnet,**
**dass** das erste Steuergerät (101) oder zumindest das Navigationssystem zur Ermittlung einer lokalen Aufenthaltswahrscheinlichkeit des Fahrzeugs auf Basis des möglichen Aufenthaltsbereichs und zur darauf folgenden Ergänzung einer Ortinformation ausgeführt ist.

9. Steuersystem nach einem der Ansprüche 7 oder 8,
**dadurch gekennzeichnet,**
**dass** die Ergänzung der Ortinformation in Form von textuellen Metadaten erfolgt.

10. Verwendung eines Steuersystems nach einem der Ansprüche 1 bis 9 zur Durchführung eines Map Matching und Ermittlung eines möglichen Aufenthaltsbereiches des Fahrzeugs auf Basis einer Auswertung einer Fahrhistorie durch das erste Steuergerät oder zumindest das Navigationssystem.

## Claims

1. Control system for a vehicle (100), said control system comprising: a first controller for storing navigation map data (101); a second controller for storing update data (109); wherein the control system (100) is designed to store the navigation map data and the update data separately, the first controller is in the form of a navigation system for the vehicle (106) or is at least coupled to a navigation system for the vehicle, the navigation system is designed for navigation exclusively on the basis of the navigation map data, **characterized in that** the first controller (101) or at least the navigation system (106) is designed to transmit data for the location area or for the local location probability to a control center or to an advanced driver assistance system (110), even if explicit association with a permitted position on a navigation map is not possible.

2. Control system according to Claim 1,
**characterized in that** the data transmitted to the control center or to the advanced driver assistance system (110) contains information about a plurality of possible positions of the vehicle.

3. Control system according to either of Claims 1 and 2,
**characterized in that** the first controller is in the form of a head unit.

4. Control system according to one of the preceding claims,
**characterized in that** the second controller (109) is in the form of a driver assistance system (110) or is at least coupled to a driver assistance system.

5. Control system according to Claim 4,
**characterized in that** the driver assistance system (110) is designed to enhance or update the navigation map data on the basis of the update data.

6. Control system according to one of the preceding claims,
**characterized in that** the first controller (101) is not designed to update the navigation map data on the basis of the update data.

7. Control system according to one of Claims 1 to 6,
**characterized in that** the first controller (101) or at least the navigation system is designed to perform map matching and to ascertain a possible location area for the vehicle on the basis of an evaluation of a travel history.

8. Control system according to Claim 7,
**characterized in that** the first controller (101) or at least the navigation system is designed to ascertain a local location probability for the vehicle on the basis of the possible location area and to subsequently supplement a location information item.

9. Control system according to either of Claims 7 and 8,
**characterized in that** the location information item is supplemented in the form of textual meta data.

10. Use of a control system according to one of Claims 1 to 9 for performing map matching and ascertaining a possible location area for the vehicle on the basis of an evaluation of a travel history by the first controller or at least the navigation system.

## Revendications

1. Système de commande pour un véhicule (100), le système de commande comprenant : un premier contrôleur pour mémoriser des données de carte de navigation (101) ; un deuxième contrôleur pour mémoriser des données d'actualisation (109) ; le système de commande (100) étant réalisé pour mémoriser séparément les données de carte de navigation et les données d'actualisation, le premier contrôleur étant réalisé sous la forme d'un système de navigation du véhicule (106) ou étant connecté avec au moins un système de navigation du véhicule, le système de navigation étant configuré pour la navigation exclusivement sur la base des données de carte de navigation,
**caractérisé en ce**
**que** le premier contrôleur (101) ou au moins le système de navigation (106) est configuré pour communiquer des données concernant la zone de séjour ou la probabilité de séjour local à une centrale ou à un système évolué d'assistance au conducteur (110), même si aucune association explicite à une position autorisée sur une carte de navigation n'est possible.

2. Système de commande selon la revendication 1, **caractérisé en ce que** les données communiquées à la centrale ou au système évolué d'assistance au conducteur (110) contiennent des informations sur plusieurs positions possibles du véhicule.

3. Système de commande selon l'une des revendications 1 ou 2, **caractérisé en ce que** le premier contrôleur est réalisé sous la forme d'un appareil tête levée.

4. Système de commande selon l'une des revendications précédentes, **caractérisé en ce que** le deuxième contrôleur (109) est réalisé sous la forme d'un système d'assistance au conducteur (110) ou est au moins connecté avec un système d'assistance au conducteur.

5. Système de commande selon la revendication 4, **caractérisé en ce que** le système d'assistance au conducteur (110) est configuré pour enrichir ou actualiser les données de carte de navigation en se basant sur les données d'actualisation.

6. Système de commande selon l'une des revendications précédentes, **caractérisé en ce que** le premier contrôleur (101) n'est pas configuré pour actualiser les données de carte de navigation en se basant sur les données d'actualisation.

7. Système de commande selon l'une des revendications 1 à 6, **caractérisé en ce que** le premier contrôleur (101) ou au moins le système de navigation est configuré pour effectuer une mise en concordance de la carte et pour déterminer un zone de séjour possible du véhicule en se basant sur une interprétation d'un historique de déplacement.

8. Système de commande selon la revendication 7, **caractérisé en ce que** le premier contrôleur (101) ou au moins le système de navigation est configuré pour déterminer une probabilité de séjour local du véhicule en se basant sur la zone de séjour possible et pour ensuite compléter une information de lieu.

9. Système de commande selon l'une des revendications 7 ou 8, **caractérisé en ce que** le complément de l'information de lieu est effectué sous la forme de métadonnées textuelles.

10. Utilisation d'un système de commande selon l'une des revendications 1 à 9 pour effectuer une mise en concordance de la carte et pour déterminer une zone de séjour possible du véhicule en se basant sur une interprétation d'un historique de déplacement par le premier contrôleur ou au moins le système de navigation.
